# EUROPEAN PATENT APPLICATION

(11) **EP 4 378 861 A1**
(43) Date of publication of application: **05.06.2024**
(21) Application number: 22848743.5
(22) Date of filing: 20.07.2022
(51) Int. Cl.: B65G 1/137

(54) **ORDER PREPARATION STATION**

(30) Priority: 29.07.2021 ES 202131579 U
(71) Applicant: Mecalux, S.A., 08940 Cornella De Llobregat (Barcelona) (ES)
(72) Inventor: MORENO AMADO, Pedro Alberto, 08940 CORNELLA DE LLOBREGAT (BARCELONA) (ES)
(74) Representative: Isern Patentes y Marcas S.L.
(86) International application number: PCT/ES2022/070478
(87) International publication number: WO 2023/007046

(57) **Abstract**

The invention relates to an order preparation station for transferring articles from a product container to an order container, comprising: a main line for transporting a product container; a presentation line for receiving a product container; extraction means for extracting the product container from the main line and for transporting it to the presentation line; an order management system; an order preparation line comprising order stations fed with order containers; an incoming transporter connected to a transport system, prepared to receive the order containers coming from the aforementioned system; and a sequencing cart for distributing order containers from the transporter to the order stations; where the management system displays the number of product units extracted from the product container to be deposited in the order containers.

## Description

### TECHNICAL FIELD OF THE INVENTION

The present invention relates to a work station, or order station, in which orders are prepared manually by an order operator from product units that are moved in product containers that are transported along main transport lines along all or part of a facility to the work station in question where product units from the product container are appropriately distributed into different order containers based on an order preparation order that typically consists of several different articles.

### STATE OF THE ART

Order preparation stations, commonly known as order stations, are widely used in large facilities for storing and distributing products according to orders, in which an increasing number of alternative or different configurations are required in order to improve efficiency in order preparation, as well as in the ergonomics of the operator who is responsible for preparing the order.

In these large facilities, product containers containing product units of articles or objects to be prepared as an order are transported to the order preparation station, order station, and there they are removed by the order operator, responsible for preparing the orders, from the product containers and are deposited in order containers according to the order in question. The order stations are connected by means of a technical transport device to a storage for the product containers and these containers are automatically transported to the order stations.

In a work area, or presentation line, of the order station, one or more product containers with the products to be prepared for the order are made available to the order operator at an ergonomically advantageous distance and position, such that the order operator can comfortably remove the products from the product container, and also, in an ergonomically advantageous position, the different order containers are made available to the order operator for orderly placing, according to order, the products removed from the product containers.

Regarding the arrangement of the order containers within the order station, various configurations have been tested both for facilitating the work of the order operator, and for more efficiently moving the order containers both during the entrance, and during their removal once the articles have been arranged according to order.

A reflection of these alternative configurations is evident in Spanish patent ES2310871T3 which discloses an order preparation station, to which warehouse containers can be transported by means of a warehouse container transport line and from which by means of an evacuation of an order container transport line, order containers can be transferred in which an order preparation person gathers articles from warehouse containers, the order preparation station presenting a lung for multiple order containers to be prepared, the order containers being stored in and/or unstored from the lung by means of a shuttle, characterised in that the order preparation station further has a corrective transport line for the subsequent preparation of orders for incorrectly prepared containers, which passes through the reach area of the order preparation person and which is linked at a node to the evacuation of the order container transport line.

Another of these alternative configurations is reflected in patent ES2791408T3 which discloses an order preparation station for preparing the dispatch of articles from storage containers into order containers according to the goods-to-person principle with a storage container transport technology for transporting articles containing storage containers, particularly boxes from a storage rack located in at least two storage container cells of the dispatch preparation station arranged in a layout row and with a dispatch preparation area arranged along the layout row for a person responsible for dispatch preparation or a dispatch preparation robot and with a first order container transport technology arranged in an additional layout row for transporting first order containers to accommodate articles removed from the storage containers, a second order container transport technology being provided for transporting second order containers, in particular boxes, to accommodate articles in the order container cells also arranged in the layout row of the dispatch preparation station.

Another prior art disclosure is made in German patent application publication DE10136354A1 which discloses an order process and an order system for distribution with a container storage and an associated storage and retrieval unit for removing and storing the containers from or to the container warehouse to or from at least two order work stations, and with a distribution system for the distribution of the containers to the individual work stations, it is proposed that a container selected from the container shelf through the storage and retrieval unit is provided separately for each work station, closed transporter and is fed to a specific work station, and that after the container has been treated at the work station, the container is returned to the container via the selected transport route. The storage and retrieval units are preferably level control units that are assigned to each level of the container rack, as well as to at least one container elevator that is then connected to the transporter tracks.

As mentioned previously, despite the disclosure in the state of the art of different configurations in order stations for the efficient arrangement of order containers in the order preparation area, alternative solutions are still required in order stations to further increase this efficiency, improving the circulation of order containers, increasing the comfort of the order operator, which leads to an increase in the productivity of the order preparation process.

### DESCRIPTION

To provide a more efficient solution than those provided in the state of the art, the present invention discloses an order preparation station for manually transferring articles from at least one product container to at least one order container by an order operator comprising a main line provided for transporting the at least one product container, where a plurality of different product units are provided in the product container, a presentation line provided for receiving the at least one product container, where, from said product presentation line, the order operator can remove the required units from said product container, extraction means for extracting the container configured for extracting the product container from the main line and transport it to the presentation line, an order management system configured for indicating to the operator the units to be removed from the product container comprising an information screen, and an order preparation line comprising order stations fed with order containers in which the order operator selectively deposits the product units extracted from the product container.

Particularly, the order preparation station comprises an incoming transporter connected to a global transport system of the facility, prepared to receive the order containers coming from said global transport system of the facility, and a sequencing cart configured for transferring and distributing one by one the order containers from the incoming transporter to the order stations of the order preparation line, where the order management system is configured to indicate to the order operator the number of product units extracted from the product container that must be deposited in each of the order containers.

Alternatively, the preparation line is parallel to the main line and, in turn, adjacent to the presentation line.

Likewise, the main line is in a higher position measured with respect to the vertical than the order preparation line.

In preferred embodiments, the presentation line is double, such that two product containers are extracted from the main line and arranged on said presentation line.

In other alternative embodiments of the invention, and to improve the ergonomics of the order operator, the product container can be tilted in the presentation line. In this sense, referring to "tilting" or "tilting the product container" means that, in the presentation line, the container is in a position in the opening of said order container and is oriented towards the order operator to facilitate the visualisation of the order elements contained and, consequently, facilitating the order, the product container being inclined at a certain angle with respect to the horizontal.

To carry out this tilting of the product container, the presentation line comprises a tilting mechanism configured for tilting the product container arranged on said presentation line. This tilting mechanism may either tilt at least a portion of the presentation line and/or the product container.

Alternatively, and with the same purpose of tilting the product container on the presentation line, the extraction means for extracting the container comprise tilting means configured for tilting the product container during displacement towards the presentation line and/or in the presentation line.

Moreover, and in alternative embodiments of the invention, the order management system comprises a pick-to-light (PTL) system arranged at each order container station configured for indicating to the operator the order container in which the product unit(s) removed from the product container must be deposited. Likewise, the order management system comprises a validation button arranged in a position opposite each order container station such that, once the preparation of the order is complete, the order operator confirms the process by pressing said validation button.

Preferably the sequencing cart is configured to remove the order container from the order station and transfer it to an outgoing transporter which, in turn, is connected to the transport system of the facility.

Alternatively, the order preparation station comprises a height-adjustable platform on which the order operator is expected to be located.

Advantageously, the order preparation station combines a fixed container transporter system for containers carrying the reference products in an upper portion, with a dynamic sequencing system in its lower portion that efficiently moves and distributes the order containers.

### BRIEF DESCRIPTION OF THE FIGURES

The foregoing and other advantages and features will be more fully understood from the following detailed description of exemplary embodiments with reference to the accompanying drawings, which should be considered by way of illustration and not limitation, wherein:
- Figure 1 is a perspective view of the order preparation station seen from behind the order operator, where some elements have been removed to facilitate the display of the main components that are part of the invention.
- Figure 2 is a perspective view of the order preparation station seen from behind the order operator, in which all the elements suppressed in Figure 1 are arranged for displaying the additional components that are also part of the invention.
- Figure 3 is a perspective cutaway view of the order preparation station seen from the front of the order operator, in which the sequencing cart is mainly displayed.

### DETAILED DESCRIPTION OF AN EXEMPLARY EMBODIMENT

In the following detailed description, numerous specific details are set forth in the form of examples to provide a thorough understanding of the relevant teachings. However, it will be apparent to those skilled in the art that the present teachings can be implemented without such details.

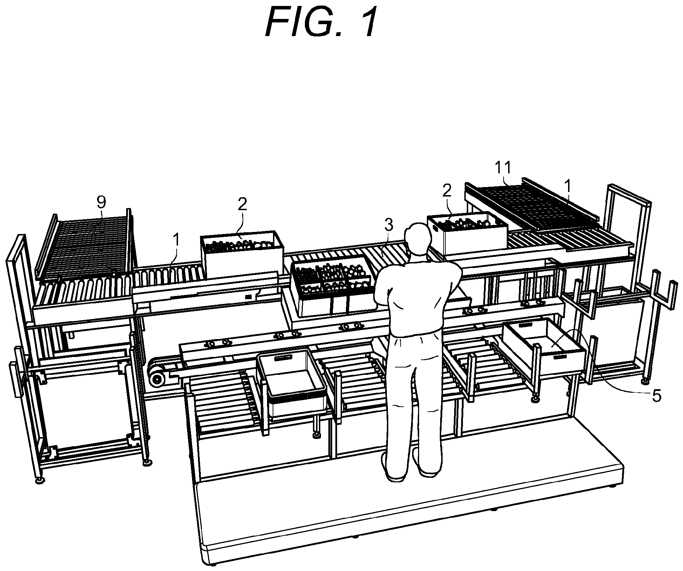

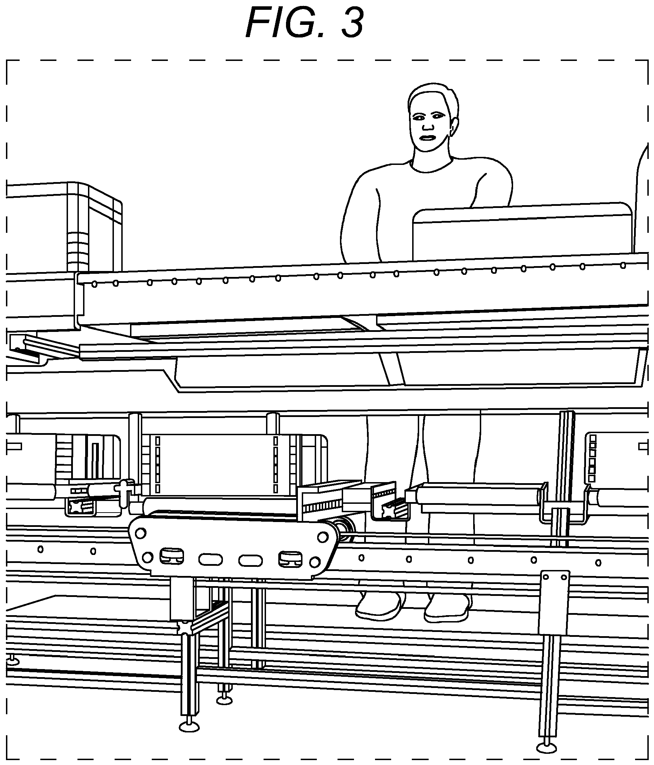

As can be seen in figures 1 to 3 that accompany the detailed description, the present invention comprises an order preparation station for manually transferring articles from at least one product container 2 to at least one order container 5 by an order operator, responsible for preparing the orders, comprising a main line 1, through which the product containers 2 containing the product references required for preparing the different orders circulate. These product containers 5 are moved by extraction means for extracting containers from the main line 1 to a presentation line 3, preferably double, i.e., capable of housing two product containers 5, said presentation line 3 being adjacent to the main line 1, and from which the order operator can remove the required units.

As seen in Figure 1, to improve the ergonomics of the order operator, the product container 2 can be inclined with respect to the horizontal on the presentation line 3, the product container 2 being tilted at a certain angle with respect to the horizontal.

This tilting of the product container 2 can be carried out by a tilting mechanism (not shown) linked to the presentation line 3, where this tilting mechanism is configured to tilt the product container 2 arranged on said presentation line being able to tilt all or at least a portion of the presentation line 3 and/or tilt the product container 2. For example, the presentation line 3 can be of the tilting type such that the tilting mechanism is a combination of a tilting structure driven in discrete rotation by a motor with an encoder, servomotor, a transmission or the like. Alternatively, the presentation line may be static, not tilting, but the tilting mechanism may take the form of a platform that tilts the product container or, at least, an actuator that tilts the product container 2 by one of its ends.

Alternatively, and with the same purpose of placing the product container 2 tilted on the presentation line 3, the extraction means for extracting the container comprise tilting means (not shown) configured for tilting the product container 2 during the displacement to the presentation line 3 and/or on the presentation line 3. These tilting means can be, for example, rollers prepared for tilting and moving the product container 2 to the presentation line. Alternatively, the tilting means may take the form of a tilting platform (not shown) that tilts between the line of the main line 1 and the order presentation line 3, and this tilting platform may even form at least a portion of the presentation line 3.

Furthermore, the number of units that the order operator must remove will be informed by an order management system, for example, EasyWMSO, through an information screen 4.

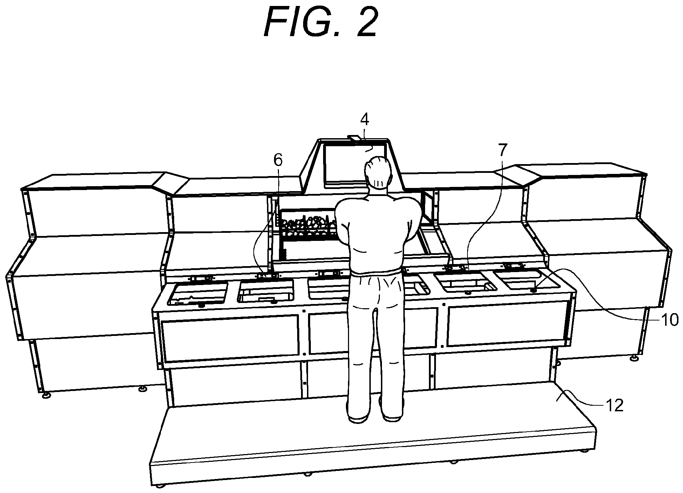

The product units extracted from the product containers 2 containing the product references are deposited in order containers 5 which, in the embodiment illustrated in Figures 1 and 2, are six order containers 5, which are arranged longitudinally parallel to main line 1 and facing the order operator. The product units to be deposited in each order container 5 are indicated to the operator by means of a PTL system 6, which forms part of the order management system, which are arranged in an order preparation line aligned in each order station 7.

The order containers 5 are transferred to the different order stations 7 by means of an incoming transporter 8 that is connected to a global transport system of the facility from which it receives the order container 5. Where each order container 5 is transferred to a sequencing cart 9, which has the function of moving it to the corresponding order station 7.

Once the order is completed, the order operator confirms the process using a validation button 10, located in a position opposite the order station 7.

The order container 5 is removed from the order station 7 by means of the sequencing cart 9, which is responsible for transferring said order container 5 to an outgoing transporter 11, in turn connected to the transport system of the facility.

As seen in Figures 1 and 2, the position of the order operator can be adjusted in height using a height-adjustable platform 12 that is integrated into the order preparation station.

## Claims

1. An order preparation station for manually transferring articles from at least one product container (2) to at least one order container (5) by an order operator comprising:
- a main line (1) provided for transporting the at least one product container (2), wherein the product container (2) is provided with a plurality of different product units;
- a presentation line (3) provided for receiving the at least one product container (2), where, from said product presentation line, the order operator can remove the required units from said product container (2);
- extraction means for extracting the container configured for extracting the product container (2) from the main line (1) and for transporting it to the presentation line (3);
- an order management system configured for indicating to the operator the units to be removed from the product container (2) comprising an information screen (4); and
- an order preparation line comprising order stations (7) fed with order containers (5) in which the order operator selectively deposits the product units extracted from the product container (2);
**characterised in that** it comprises
- an incoming transporter (8) connected to a global transport system of the facility, prepared to receive the order containers (5) coming from said global transport system of the facility; and
- a sequencing cart (9) configured for transferring and distributing the order containers (5) one by one from the incoming transporter (8) to the order stations (7) of the order preparation line;
where the order management system is configured to indicate to the order operator the number of product units extracted from the product container (2) that must be deposited in each of the order containers (5).

2. The station according to claim 1, wherein the order preparation line is parallel to the main line (1) and, at the same time, is adjacent to the presentation line (3).

3. The station according to any of the preceding claims, wherein the main line (1) is in a higher position measured with respect to the vertical than the order preparation line.

4. The station according to any of the preceding claims, wherein the presentation line (3) is double, such that two product containers (2) are extracted from the main line (1) and arranged on said presentation line (3).

5. The station according to any of the preceding claims, wherein the presentation line (3) comprises a tilting mechanism configured for tilting the product container (2) arranged on said presentation line (3).

6. The station according to any of the preceding claims, wherein the extraction means for extracting the container comprise tilting means configured for tilting the product container (2) during the displacement towards the presentation line (3) and/or on the presentation line (3).

7. The station according to any of the preceding claims, wherein the order management system comprises a pick-to-light (PTL) system (6) arranged in each order container station (7) configured for indicating to the operator the order container (5) in which the product unit(s) removed from the product container (2) must be deposited.

8. The station according to any of the preceding claims, wherein the order management system comprises a validation button (10) arranged in a position opposite each order container station (7) such that, once the preparation of the order is complete, the order operator confirms the process by pressing said validation button (10).

9. The station according to any of the preceding claims, wherein the sequencing cart (9) is configured to remove the order container (5) from the order station (7) and transfer it to an outgoing transporter (11) which, in turn, is connected to the transport system of the facility.

10. The station according to any of the preceding claims, comprising a height-adjustable platform (12) on which the order operator is expected to be located.
